# EUROPEAN PATENT SPECIFICATION

(11) **EP 3 761 725 B1**
(45) Date of publication and mention of the grant of the patent: **20.11.2024**
(21) Application number: 19184036.2
(22) Date of filing: 03.07.2019
(51) Int. Cl.: H04W 56/00

(54) **SYSTEM AND METHOD FOR NETWORK SYNCHRONIZATION CORRECTION**
SYSTEM UND VERFAHREN ZUR NETZSYNCHRONISATIONSKORREKTUR
SYSTÈME ET PROCÉDÉ DE CORRECTION DE SYNCHRONISATION DE RÉSEAU

(43) Date of publication of application: 06.01.2021
(73) Proprietor: Rohde & Schwarz GmbH & Co. KG, 81671 München (DE)
(72) Inventor: Cardalda-Garcia, Adrian, 81369 München (DE); Schlienz, Jürgen, 85586 Poing (DE); Merkel, Sandra, 81825 München (DE)
(74) Representative: Novagraaf Group

(56) References cited:
- WO-A1-2010/135712
- WO-A1-2013/075274
- US-A1- 2016 302 165
- "3rd Generation Partnership Project; Technical Specification Group Radio Access Network; Network Assistance for Network Synchronization (Release 14)", 3GPP STANDARD ; TECHNICAL REPORT ; 3GPP TR 36.898, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V14.0.0, 13 January 2017 (2017-01-13), pages 1 - 25, XP051295591
- CATT: "Network synchronization based on RAT-dependent signals", vol. RAN WG1, no. Xi'an, China; 20190408 - 20190412, 3 April 2019 (2019-04-03), XP051707424, Retrieved from the Internet <URL:http://www.3gpp.org/ftp/tsg%5Fran/WG1%5FRL1/TSGR1%5F96b/Docs/R1%2D1905350%2Ezip> [retrieved on 20190403]
- ERICSSON: "On the use of RTT for positioning", vol. RAN WG1, no. Athens, Greece; 20190225 - 20190301, 15 February 2019 (2019-02-15), XP051600837, Retrieved from the Internet <URL:http://www.3gpp.org/ftp/tsg%5Fran/WG1%5FRL1/TSGR1%5F96/Docs/R1%2D1903141%2Ezip> [retrieved on 20190215]

## Description

The invention relates to a system and a corresponding method for network synchronization correction, especially for time difference of arrival (TDOA) based network synchronization correction, especially in Fifth-Generation New Radio (5G-NR) access technology.

Generally, for network services that use time division multiplexing (TDM) technologies such as synchronous optical network (SONET), synchronous digital hierarchy (SDH) or asynchronous transfer mode (ATM), it is necessary to match clock frequencies between network systems, in other words, to synchronize networks, so that data can be transmitted and received. Synchronization technologies are fundamental network service technologies that are widely used by telecommunications carriers around the world. The standardization of these technologies has been ongoing for many years in international organizations. For 5G-NR, the Telecommunication Standardization Sector of the International Telecommunication Union (ITU-T) defined 3 microseconds (+/- 1.5 microseconds end-to-end) as the synchronization accuracy requirement for the next generation Node B (gNB).

In the case of time difference of arrival (TDOA) based positioning system, the network synchronization error can be a critical issue since the error is added to the TDOA measurement and further translates into high position error. For instance, having a +/- 1.5 microseconds end-to-end requirement, the error translates to 450 meters of error. As commercial 5G positioning use cases that have a horizontal positioning requirement of 5 meters accuracy and the US Federal Communications Commission (FCC) regulatory requirements mandate 50 meters horizontal accuracy, the TDOA based positioning is severely affected by the listed synchronization error.

The synchronization error of the network could be reduced, for instance by installing high precision oscillators and synchronization devices which leads to a cost-intensive setup. A Round Trip Time (RTT) measurement method or Global Navigation Satellite System (GNSS) can also be introduced in order to minimize the synchronization error at the cost of additional network resources.

For example, the document KR 10-0531043 B1 shows a position determination method of wireless communication equipment for correcting the influence of the distance error. A hybrid of satellite based Global Positioning System (GPS) is utilized on a mobile communication network in order to minimize the delay influence. However, GPS-based positioning is not suitable to establish indoor locations, since microwaves will be considerably attenuated and scattered by roofs, walls and other objects. In addition, the implementation of GPS-based positioning on the mobile network requires additional network resources.

Other examples of prior art include, document US 2016/302165 A1 which discloses base station synchronization, document WO 2013/075274 A1 which discloses relative timing measurements for supporting positioning and document WO 2010/135712 A1 which discloses joint processing between base stations using a synchronization parameter.

Accordingly, the object of the invention is to provide a system and a method for network synchronization correction in a cost-effective manner without consuming additional network resources, especially to address both regulatory and commercial positioning requirements in 5G-NR.

The object is solved by the features of the first independent claim for the system and by the features of the second independent claim for the method. The dependent claims contain further developments.

According to a first aspect of the invention, a system for network synchronization correction is provided. The system comprises at least two base stations and a user equipment. In this context, the base stations are adapted to transmit a reference signal. Furthermore, at least one of the base stations is adapted to receive the reference signal of the other base station and is adapted to calculate a time of arrival of the reference signal. Therefore, a base station, for instance a gNB in 5G-NR network, transmits a reference signal as well as listens to the reference signals from neighbor base stations. Since the base station precisely knows at which time instant the neighbor base station has transmitted the signal, it can thereby calculate the time of arrival (TOA) of the signal from the neighbor.

The reference signal can be any of the conventional transmitted signals from the base station, for instance Positioning Reference Signals (PRS), Primary Synchronization Signals (PSS), Secondary Synchronization signals (SSS) and the like. Alternatively, all of these signals may be used for more flexibility since the user equipment knows at which point in time and on which carrier the signal may come.

According to a first implementation form of said first aspect of the invention, the distance between the base stations are known. The position of the base stations can be defined according to a set of parameters standardized by the World Geodetic System (WGS), for instance WGS 84 in order to effectively identify the coordinates and derived constants. Advantageously, a pre-determined distance between two base stations can be achieved in the case of millimeter wave usage for 5G technology.

According to a second implementation form of said first aspect of the invention, the at least one of the base stations is further adapted to calculate a synchronization error between the two base stations based on the known distance and the calculated time of arrival of the reference signal. In this context, the base station calculates a relative distance based on the known distance from the neighbor base station and the TOA calculations. With the difference between the known distance and the relative distance, the base station further calculates the synchronization error in the form of, for instance a time offset with respect to the neighbor base station.

According to a further implementation form of said first aspect of the invention, the user equipment is adapted to receive the respective reference signals from the base stations and is further adapted to measure a time difference of arrival between the reference signals. Thus, the user equipment measures the time interval that is observed between the reception of downlink signals from the two base stations.

According to a further implementation form of said first aspect of the invention, the at least one of the base stations is further adapted to transmit the synchronization error to the user equipment and whereby the user equipment is further adapted to optimize the measured time difference of arrival between the reference signals based on the synchronization error. Advantageously, the base station sends the synchronization error to the user equipment, for instance in the form of an assistance data, and the user equipment corrects the TDOA measurement based on the synchronization error.

According to a further implementation form of said first aspect of the invention, the user equipment is further adapted to transmit the measured time difference of arrival between the reference signals to at least one of the base stations and whereby the base station is further adapted to optimize the synchronization error based on the measured time difference of arrival between the reference signals. In addition to the user equipment correcting the TDOA measurements, the network is advantageously able to correct the TDOA measurements on its own. Here, the user equipment sends the TDOA measurements to the base station where the base station corrects the synchronization error.

According to a further implementation form of said first aspect of the invention, the user equipment is further adapted to perform at least three time difference of arrival measurements between the reference signals of the base stations. Advantageously, a three-dimensional (3D) position calculation is performed.

According to a further implementation form of said first aspect of the invention, the system further comprises a synchronization error database and wherein the synchronization error is stored within the database. The database can be a physical or logical entity, for instance a Location Server (LCS), which contains and manages the synchronization error data.

According to a further implementation form of said first aspect of the invention, the synchronization error database is updated periodically. Advantageously, the data update rate is effectively matched with respect to the gradual fluctuation rate of synchronization error due to, for instance the drift of the oscillator clock of the base station.

According to a second aspect of the invention, a method for network synchronization correction comprising at least two base stations and a user equipment is provided. The method comprises the steps of transmitting a reference signal from the base stations, receiving the reference signal by at least one of the base stations and calculating a time of arrival of the reference signal. Therefore, a base station, for instance a gNB in 5G-NR network, transmits a reference signal as well as listen to the reference signals from neighbor base stations. Since the base station precisely knows at which time instant the neighbor base station has transmitted the signal, it can thereby calculate the time of arrival (TOA) of the signal from the neighbor.

According to a first implementation form of said second aspect of the invention, the distances between the base stations are known. Advantageously, a pre-determined distance between two base stations can be achieved in the case of millimeter wave usage for 5G technology.

According to a second implementation form of said second aspect of the invention, the method further comprises the step of calculating a synchronization error between the two base stations based on the known distance and the calculated time of arrival of the reference signal. Hence, the base station calculates a relative distance based on the known distance and the TOA calculations and thereby calculates the synchronization error in the form of, for instance a time offset with respect to the neighbor base station.

According to a further implementation form of said second aspect of the invention, the method further comprises the steps of receiving the respective reference signals by the user equipment from the base stations and measuring a time difference of arrival between the reference signals. Thus, the user equipment measures the time interval that is observed between the reception of downlink signals from the two base stations.

According to a further implementation form of said second aspect of the invention, the method further comprises the steps of transmitting the synchronization error to the user equipment and optimizing the measured time difference of arrival between the reference signals based on the synchronization error by the user equipment. Advantageously, the base station sends the synchronization error to the user equipment, for instance in the form of an assistance data, and the user equipment corrects the TDOA measurement based on the synchronization error.

According to a further implementation form of said second aspect of the invention, the method further comprises the steps of transmitting the measured time difference of arrival between the reference signals to at least one of the base stations and optimizing the synchronization error based on the measured time difference of arrival between the reference signals by the base station. In addition to the user equipment correcting the TDOA measurements, the network is advantageously able to correct the TDOA measurements on its own.

Exemplary embodiments of the invention are now further explained with respect to the drawings by way of example only, and not for limitation. In the drawings:
- Fig. 1: shows a first exemplary embodiment of the system according to the first aspect of the invention,
- Fig. 2: shows exemplary block diagrams of the user equipment and base station according to the first aspect of the invention,
- Fig. 3: shows a second exemplary embodiment of the system according to the first aspect of the invention, and
- Fig. 4: shows a flow chart of an exemplary embodiment of the inventive method according to the second aspect of the invention.

Reference will now be made in detail to the embodiments of the present invention, examples of which are illustrated in the accompanying drawings. However, the following embodiments of the present invention may be variously modified and the range of the present invention is not limited by the following embodiments.

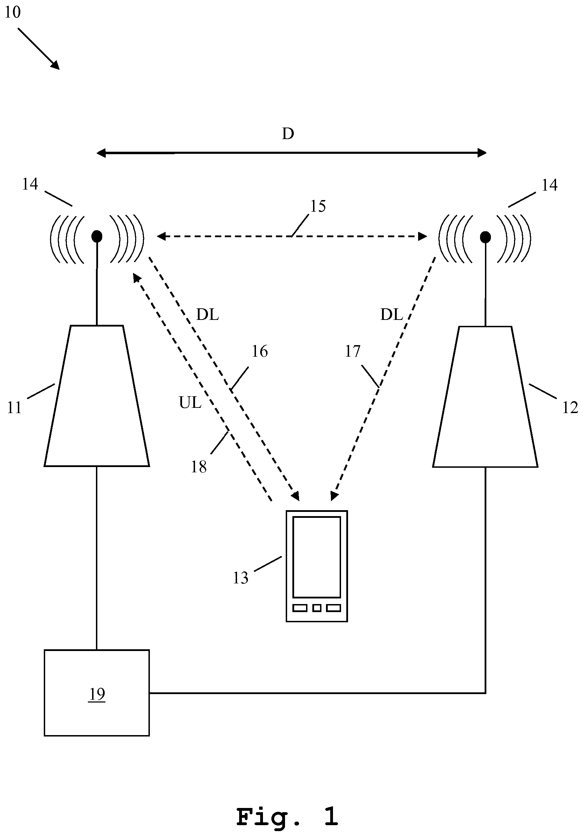

In Fig. 1, a first exemplary embodiment of the system 10 according to the first aspect of the invention is illustrated. The system 10 comprises two base stations 11, 12 and a user equipment 13. Each base station transmits a reference signal 14, for instance PRS, PSS, SSS and so on. The base stations 11, 12 are separated by a pre-defined distance *D*. Typically, the reference signal 14 transmitted by each base station 11, 12 is received by the user equipment 13 through downlink transmission paths 16, 17. The user equipment 13 then performs the TDOA measurements based on the reference signals 14 received from each of the base stations 11, 12.

In addition, each base station 11, 12 further listens for the neighboring reference signals 14 and receives the reference signal 14 from its neighbor, for instance through signal path 15. The base station 11, 12 then calculates the TOA of the reference signal 14 from its neighbor. With the help of TOA measurements, the base station 11, 12 calculates a relative distance *D̂*. With the difference between the known distance *D* and the relative distance *D̂,* the base station 11, 12 calculates the time offset as the synchronization error with respect to its neighbor.

Advantageously, the system 10 allows two possibilities to correct the network synchronization, one is handled by the user equipment 13 and the other is performed by the network itself. In the former case, the base station 11, 12 transmits the time offset to the user equipment 13 as an assistance data and the user equipment 13 corrects the TDOA measurement. In the case where the network corrects the synchronization error, the user equipment 13 transmits the TDOA measurement, for instance through the uplink path 18 to the base stations 11 and the base station 11 corrects the synchronization error based on the TDOA measurement.

The system 10 further comprises a synchronization error database 19, connected to the base stations 11, 12, where the error data are stored and are periodically updated. The system 10 effectively implements TDOA based positioning, which does not consume additional network resources. Hence, the system 10 provides a cost-effective solution for network synchronization in order to reduce network synchronization error.

It is to be noted, the user equipment 13 denotes a mobile or fixed type user terminal that transmit and receive user data and control information to and from a base station. The user equipment 13 may be referred to as a Terminal Equipment (TE), a Mobile Station (MS), a Mobile Terminal (MT), a User Terminal (UT), a Subscriber Station (SS), a wireless device, a Personal Digital Assistant (PDA), a wireless modem, or a handheld device. Furthermore, the base station 11, 12 denotes a fixed station that performs communication with a user equipment 13 and/or another base stations 11, 12, and exchanges various kinds of data and control information with the user equipment 13 and another base station 11, 12. The base station may be referred to as another terminology such as an Access Point (AP) or a next generation Node B (gNB).

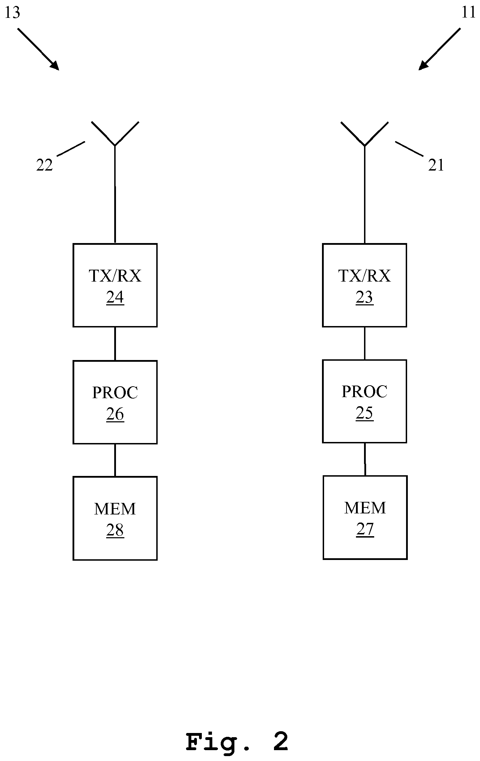

In Fig. 2, exemplary block diagrams of the user equipment and base station according to the first aspect of the invention are illustrated. The user equipment 13 serves as a transmitter on the uplink and as a receiver on the downlink. In contrast, the base station 11 may serve as a receiver on the uplink and as a transmitter on the downlink. Although only one base station 11 is illustrated in Fig. 2, the features and functionality as described herein hold true to the other base station 12.

The user equipment 13 and the base station 11 comprise antennas 21, 22 for transmitting and/or receiving data and control signals. In particular, the base station antenna 21 transmits reference signals to the user equipment 13 and further receives reference signals from any neighbor base station. Both antennas 21, 22 are connected to transmit/receive circuitry 23, 24 followed by processing units 25, 26. The processing unit 25 of the base station 11 calculates time offsets from neighboring reference signals and transmits the time offset to the user equipment 13. In addition to the synchronization error database illustrated in Fig. 1, the base station 11 may further comprise memory 27 in order to queue the processed calculations from the processing unit 25. The base station 11 further stores the TDOA measurements received from the user equipment 13 if the network is performing the synchronization correction on its own.

The processing unit 26 of the user equipment 13 performs TDOA measurements based on the received reference signals and stores these results in a memory 28. The user equipment 13 further stores the time offset measurements as received from the base station 11 if the user equipment 13 is performing the network synchronization correction. The processing units 25, 26 may also be referred to as microcontrollers, microprocessors, microcomputers, etc. The processing units 25, 26 may be configured in hardware, firmware, software, or their combination.

The memories 27, 28 may further store programs required for signal processing and controlling of the processing units 25, 26 and temporarily store input and output information. Each of the memories 27, 28 may be implemented into a flash memory-type storage medium, a hard disc-type storage medium, a multimedia card micro-type storage medium, a card-type memory, a Random Access Memory (RAM), a Read-Only Memory (ROM), an Electrically Erasable Programmable Read-Only Memory (EEPROM), a Programmable Read-Only Memory (PROM), a magnetic memory, a magnetic disc, or an optical disk.

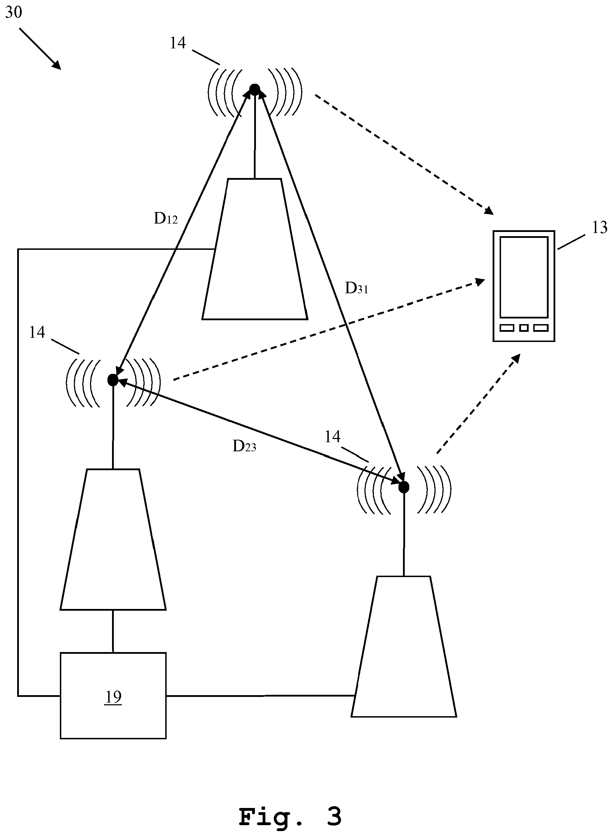

In Fig. 3, a second exemplary embodiment of the system 30 according to the first aspect of the invention is illustrated. The system 30 comprises three base stations, separated by predefined distances *D*₁₂,*D*₂₂,*D*₃₁. Each of the base stations are identical to the base stations illustrated in Fig. 1 or Fig. 2 and transmits a reference signal 14. In order to perform position calculation, the user equipment 13 is required to perform TDOA measurements for each pair of the base stations with respect to their known distances *D*₁₂,*D*₂₃,*D*₃₁. It is also necessary to obtain at least three TDOA measurements to calculate a 3D position. In this case, the time offsets for the pairs of base stations are required by the user equipment 13 to effectively correct the TDOA measurements.

It is to be noted that an absolute synchronization error for the pairs of base stations is not possible to calculate. It is only possible to calculate the relative synchronization error between two base stations.

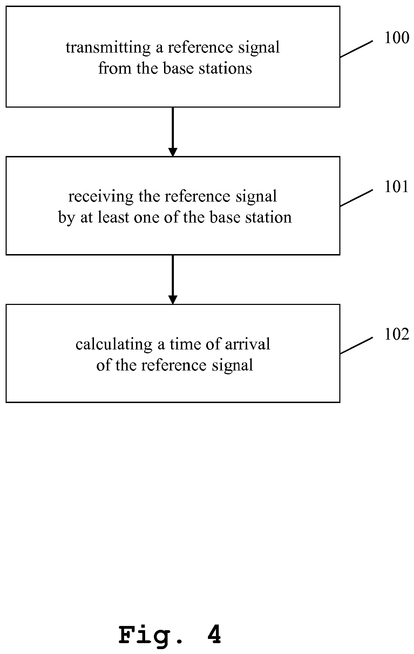

In Fig. 4, a flow chart of an exemplary embodiment of the inventive method according to the second aspect of the invention is illustrated. In a first step 100, a reference signal is transmitted from the base stations. In a second step 101, the reference signal is received by at least one of the base station. In a third step 102, a time of arrival of the reference signal is calculated.

In addition to this, the distance between the base stations are known and the inventive method may further comprise the step of calculating a synchronization error between the two base stations based on the known distance and the calculated time of arrival of the reference signal.

It might be further advantageous if the method further comprises the steps of receiving the respective reference signals by the user equipment from the base stations and measuring a time difference of arrival between the reference signals.

Moreover, the method according to the second aspect of the invention may further comprise the steps of transmitting the synchronization error to the user equipment and optimizing the measured time difference of arrival between the reference signals based on the synchronization error by the user equipment.

In addition to this, the inventive method may further comprise the steps of transmitting the measured time difference of arrival between the reference signals to at least one of the base stations and optimizing the synchronization error based on the measured time difference of arrival between the reference signals by the base station.

The embodiments of the present invention can be implemented by hardware, software, or any combination thereof. Various embodiments of the present invention may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, or the like.

## Claims

1. A system (10) for network synchronization correction comprising:
at least two base stations (11, 12), and
a user equipment (13),
wherein the base stations (11, 12) are adapted to transmit a reference signal (14),
wherein at least one of the base stations (11, 12) is adapted to receive the reference signal (14) of the other base station (11, 12) and is adapted to calculate a time of arrival of the reference signal (14), whereby a time instant at which the other base station (11, 12) transmits the reference signal (14) is known to the at least one of the base stations (11, 12),
wherein the at least one of the base stations (11, 12) is adapted to calculate a relative distance with the help of the calculated time of arrival of the reference signal (14),
wherein the at least one of the base stations (11, 12) is further adapted to calculate a time offset as a synchronization error with respect to its neighbor with the difference between a known distance (*D*) between the base stations (11, 12) and the relative distance,
wherein the user equipment (13) is adapted to receive the respective reference signals (14) from the base stations (11, 12) and is further adapted to measure a time difference of arrival between the reference signals (14), and wherein the at least one of the base stations (11, 12) is further adapted to transmit the synchronization error to the user equipment (13) as assistance data and whereby the user equipment (13) is further adapted to correct the measured time difference of arrival between the reference signals (14) based on the synchronization error.

2. The system according to claim 1, wherein the distance (D) between the base stations (11, 12) is known.

3. The system according to claim 1,
wherein the user equipment (13) is further adapted to transmit the measured time difference of arrival between the reference signals (14) to at least one of the base stations (11, 12) and whereby this base station (11, 12) is further adapted to optimize the synchronization error based on the measured time difference of arrival between the reference signals (14).

4. The system according to any of claims 1 to 3,
wherein the user equipment (13) is further adapted to perform at least three time difference of arrival measurements between the reference signals (14) of the base stations (11, 12).

5. The system according to any of claims 1 to 4,
wherein the system (10) further comprises a synchronization error database (19) and wherein the synchronization error is stored within the database (19).

6. The system according to claim 5,
wherein the synchronization error database (19) is updated periodically.

7. A method for network synchronization correction comprising at least two base stations (11, 12) and a user equipment (13) comprising the steps of:
transmitting a reference signal (14) from the base stations (11, 12),
receiving the reference signal (14) by at least one of the base stations (11, 12) with a known time instant at which the reference signal (14) is transmitted,
calculating a time of arrival of the reference signal (14),
calculating a relative distance with the help of the calculated time of arrival of the reference signal (14),
calculating a time offset as a synchronization error between the two base stations (11, 12) with the difference between a known distance (*D*) between the base stations (11, 12) and the relative distance,
receiving the respective reference signals (14) by the user equipment (13) form the base stations (11, 12),
measuring a time difference of arrival between the reference signals (14),
transmitting the synchronization error to the user equipment (13) as assistance data, and
correcting the measured time difference of arrival between the reference signals (14) based on the synchronization error by the user equipment (13).

8. The method according to claim 7,
wherein the distance (D) between the base stations (11, 12) is known.

9. The method according to claim 7,
wherein the method further comprises the steps of:
transmitting the measured time difference of arrival between the reference signals (14) to at least one of the base stations (11, 12), and
optimizing the synchronization error based on the measured time difference of arrival between the reference signals (14) by at least one of the base stations (11, 12).

## Patentansprüche

1. System (10) für eine Netzwerksynchronisierungskorrektur, umfassend:
mindestens zwei Basisstationen (11, 12) und
eine Benutzereinrichtung (13),
wobei die Basisstationen (11, 12) angepasst sind, um ein Referenzsignal (14) zu übertragen,
wobei mindestens eine der Basisstationen (11, 12) angepasst ist, um das Referenzsignal (14) der anderen Basisstation (11, 12) zu empfangen und angepasst ist, um eine Ankunftszeit des Referenzsignals (14) zu berechnen, wodurch ein Zeitpunkt, zu dem die andere Basisstation (11, 12) das Referenzsignal (14) überträgt, der mindestens einen der Basisstationen (11, 12) bekannt ist, wobei die mindestens eine der Basisstationen (11, 12) angepasst ist, um mit Hilfe der berechneten Ankunftszeit des Referenzsignals (14) eine relative Distanz zu berechnen,
wobei die mindestens eine der Basisstationen (11, 12) ferner angepasst ist, um einen Zeitversatz als einen Synchronisierungsfehler in Bezug auf ihren Nachbarn mit der Differenz zwischen einer bekannten Distanz *(**D**)* zwischen den Basisstationen (11, 12) und der relativen Distanz zu berechnen,
wobei die Benutzereinrichtung (13) angepasst ist, um die jeweiligen Referenzsignale (14) von den Basisstationen (11, 12) zu empfangen und ferner angepasst ist, um eine Ankunftszeitdifferenz zwischen den Referenzsignalen (14) zu messen, und
wobei die mindestens eine der Basisstationen (11, 12) ferner angepasst ist, um den Synchronisierungsfehler als Unterstützungsdaten an die Benutzereinrichtung (13) zu übertragen, und wodurch die Benutzereinrichtung (13) ferner angepasst ist, um die gemessene Ankunftszeitdifferenz zwischen den Referenzsignalen (14) basierend auf dem Synchronisierungsfehler zu korrigieren.

2. System nach Anspruch 1,
wobei die Distanz (D) zwischen den Basisstationen (11, 12) bekannt ist.

3. System nach Anspruch 1,
wobei die Benutzereinrichtung (13) ferner angepasst ist, um die gemessene Ankunftszeitdifferenz zwischen den Referenzsignalen (14) an mindestens eine der Basisstationen (11, 12) zu übertragen, und wodurch diese Basisstation (11, 12) ferner angepasst ist, um den Synchronisierungsfehler basierend auf der gemessenen Ankunftszeitdifferenz zwischen den Referenzsignalen (14) zu optimieren.

4. System nach einem der Ansprüche 1 bis 3,
wobei die Benutzereinrichtung (13) ferner angepasst ist, um mindestens drei Messungen der Ankunftszeitdifferenz zwischen den Referenzsignalen (14) der Basisstationen (11, 12) durchzuführen.

5. System nach einem der Ansprüche 1 bis 4,
wobei das System (10) ferner eine Synchronisierungsfehlerdatenbank (19) umfasst und wobei der Synchronisierungsfehler innerhalb der Datenbank (19) gespeichert wird.

6. System nach Anspruch 5,
wobei die Synchronisierungsfehlerdatenbank (19) regelmäßig aktualisiert wird.

7. Verfahren für die Netzwerksynchronisierungskorrektur, umfassend mindestens zwei Basisstationen (11, 12) und eine Benutzereinrichtung (13), umfassend die Schritte:
Übertragen eines Referenzsignals (14) von den Basisstationen (11, 12),
Empfangen des Referenzsignals (14) durch mindestens eine der Basisstationen (11, 12) mit einem bekannten Zeitpunkt, zu dem das Referenzsignal (14) übertragen wird,
Berechnen einer Ankunftszeit des Referenzsignals (14),
Berechnen einer relativen Distanz mit Hilfe der berechneten Ankunftszeit des Referenzsignals (14),
Berechnen eines Zeitversatzes als einen Synchronisierungsfehler zwischen den zwei Basisstationen (11, 12) mit der Differenz zwischen einer bekannten Distanz (D) zwischen den Basisstationen (11, 12) und der relativen Distanz,
Empfangen der jeweiligen Referenzsignale (14) durch die Benutzereinrichtung (13) von den Basisstationen (11, 12),
Messen einer Ankunftszeitdifferenz zwischen den Referenzsignalen (14),
Übertragen des Synchronisierungsfehlers an die Benutzereinrichtung (13) als Unterstützungsdaten und
Korrigieren der gemessenen Ankunftszeitdifferenz zwischen den Referenzsignalen (14) basierend auf dem Synchronisierungsfehler durch die Benutzereinrichtung (13).

8. Verfahren nach Anspruch 7,
wobei die Distanz (D) zwischen den Basisstationen (11, 12) bekannt ist.

9. Verfahren nach Anspruch 7,
wobei das Verfahren ferner die Schritte umfasst:
Übertragen der gemessenen Ankunftszeitdifferenz zwischen den Referenzsignalen (14) an mindestens eine der Basisstationen (11, 12), und
Optimieren des Synchronisierungsfehlers basierend auf der gemessenen Ankunftszeitdifferenz zwischen den Referenzsignalen (14) durch mindestens eine der Basisstationen (11, 12).

## Revendications

1. Système (10) de correction de synchronisation de réseau comprenant :
au moins deux stations de base (11, 12), et
un équipement utilisateur (13),
dans lequel les stations de base (11, 12) sont conçues pour transmettre un signal de référence (14),
dans lequel au moins l'une des stations de base (11, 12) est conçue pour recevoir le signal de référence (14) de l'autre station de base (11, 12) et est conçue pour calculer un temps d'arrivée du signal de référence (14), moyennant quoi un instant auquel l'autre station de base (11, 12) transmet le signal de référence (14) est connu de l'au moins une des stations de base (11, 12), dans lequel l'au moins une des stations de base (11, 12) est conçue pour calculer une distance relative à l'aide du temps d'arrivée calculé du signal de référence (14),
dans lequel l'au moins une des stations de base (11, 12) est en outre conçue pour calculer un décalage temporel en tant qu'erreur de synchronisation par rapport à sa voisine avec la différence entre une distance connue (***D**)* entre les stations de base (11, 12) et la distance relative,
dans lequel l'équipement utilisateur (13) est conçu pour recevoir les signaux de référence respectifs (14) en provenance des stations de base (11, 12) et est en outre conçu pour mesurer une différence temporelle d'arrivée entre les signaux de référence (14), et
dans lequel l'au moins une des stations de base (11, 12) est en outre conçue pour transmettre l'erreur de synchronisation à l'équipement utilisateur (13) en tant que données d'assistance et moyennant quoi l'équipement utilisateur (13) est en outre conçu pour corriger la différence temporelle d'arrivée mesurée entre les signaux de référence (14) sur la base de l'erreur de synchronisation.

2. Système selon la revendication 1,
dans lequel la distance (D) entre les stations de base (11, 12) est connue.

3. Système selon la revendication 1,
dans lequel l'équipement utilisateur (13) est en outre conçu pour transmettre la différence temporelle d'arrivée mesurée entre les signaux de référence (14) à au moins l'une des stations de base (11, 12) et moyennant quoi cette station de base (11, 12) est en outre conçue pour optimiser l'erreur de synchronisation sur la base de la différence temporelle d'arrivée mesurée entre les signaux de référence (14).

4. Système selon l'une quelconque des revendications 1 à 3,
dans lequel l'équipement utilisateur (13) est en outre conçu pour effectuer au moins trois différences temporelles de mesures d'arrivée entre les signaux de référence (14) des stations de base (11, 12).

5. Système selon l'une quelconque des revendications 1 à 4,
dans lequel le système (10) comprend en outre une base de données d'erreurs de synchronisation (19) et dans lequel l'erreur de synchronisation est stockée dans la base de données (19).

6. Système selon la revendication 5,
dans lequel la base de données d'erreurs de synchronisation (19) est mise à jour périodiquement.

7. Procédé de correction de synchronisation de réseau comprenant au moins deux stations de base (11, 12) et un équipement utilisateur (13) comprenant les étapes consistant à :
transmettre un signal de référence (14) depuis les stations de base (11, 12),
recevoir le signal de référence (14) par au moins l'une des stations de base (11, 12) avec un instant connu auquel le signal de référence (14) est transmis,
calculer un temps d'arrivée du signal de référence (14),
calculer une distance relative à l'aide du temps d'arrivée calculé du signal de référence (14),
calculer un décalage temporel en tant qu'erreur de synchronisation entre les deux stations de base (11, 12) avec la différence entre une distance connue (***D**)* entre les stations de base (11, 12) et la distance relative,
recevoir les signaux de référence respectifs (14) par l'équipement utilisateur (13) à partir des stations de base (11, 12),
mesurer une différence temporelle d'arrivée entre les signaux de référence (14),
transmettre l'erreur de synchronisation à l'équipement utilisateur (13) en tant que données d'assistance, et
corriger la différence temporelle d'arrivée mesurée entre les signaux de référence (14) sur la base de l'erreur de synchronisation par l'équipement utilisateur (13).

8. Procédé selon la revendication 7,
dans lequel la distance (D) entre les stations de base (11, 12) est connue.

9. Procédé selon la revendication 7,
dans lequel le procédé comprend en outre les étapes consistant à :
transmettre la différence temporelle d'arrivée mesurée entre les signaux de référence (14) à au moins l'une des stations de base (11, 12), et
optimiser l'erreur de synchronisation sur la base de la différence temporelle d'arrivée mesurée entre les signaux de référence (14) par au moins l'une des stations de base (11, 12).
